# FASCICULE DE BREVET EUROPEEN

(11) **EP 2 627 111 B1**
(45) Date de publication et mention de la délivrance du brevet: **29.03.2017**
(21) Numéro de dépôt: 13154586.5
(22) Date de dépôt: 08.02.2013
(51) Int. Cl.: H04W 16/10, H04W 84/04

(54) **Gestion dynamique de petites cellules pour optimiser la consommation énergétique d'un réseau**
Dynamisches Management von kleinen Zellen zur Optimierung des Energieverbrauchs einen Netzes
Dynamic management of small cells for optimising the power consumption of a grid

(30) Priorité: 08.02.2012 FR 1251163
(43) Date de publication de la demande: 14.08.2013
(73) Titulaire: COMMISSARIAT A L'ENERGIE ATOMIQUE ET AUX ENERGIES ALTERNATIVES, 75015 Paris (FR)
(72) Inventeur: De Domenico, Antonio, 03100 FROSINONE (IT); Calvanese Strinati, Emilio, 38000 GRENOBLE (FR)
(74) Mandataire: Regimbeau

(56) Documents cités:
- EP-A1- 2 180 739
- EP-A1- 2 207 375
- EP-A2- 2 173 135
- US-A1- 2010 169 498
- US-A1- 2011 065 446
- YAN CHEN ET AL: "Characterizing Energy Efficiency and Deployment Efficiency Relations for Green Architecture Design", COMMUNICATIONS WORKSHOPS (ICC), 2010 IEEE INTERNATIONAL CONFERENCE ON, IEEE, PISCATAWAY, NJ, USA, 23 mai 2010 (2010-05-23), pages 1-5, XP031704487, ISBN: 978-1-4244-6824-9

## Description

### DOMAINE TECHNIQUE GENERAL

L'invention concerne de manière générale le domaine des réseaux de télécommunications cellulaires et plus particulièrement celui mettant en oeuvre des petites cellules.

### ETAT DE LA TECHNIQUE

L'usage de plus en plus courant de terminaux connectés à un réseau cellulaire (par exemple des téléphones intelligents (en anglais, « *smartphone* »), des ordinateurs, etc.) a provoqué une augmentation du trafic de sorte que les réseaux cellulaires sont de plus en plus surchargés.

Pour pallier ce problème, des réseaux de petites cellules ont été proposés et déployés.

On précise que le terme petite cellule désigne aussi bien par ordre de taille croissante : une attocellule, une femtocellule, une pico-cellule, ou bien encore une micro-cellule.

Une petite cellule comprend une petite station de base de faible puissance prévue pour offrir une couverture radio limitée et dédiée à un usage résidentiel ou en entreprise. Les petites cellules sont souvent déployées à l'intérieur de bâtiments et sont connectées au réseau d'un opérateur via une connexion Internet haut débit et peuvent supporter un nombre limité de communications simultanées (voix ou données), typiquement de deux à huit communications simultanées.

Ainsi les petites cellules permettent d'améliorer la couverture cellulaire ainsi que la capacité du réseau d'un opérateur dans une zone donnée.

Un problème est que les petites cellules sont souvent déployées de manière chaotique, sans réelle planification, de sorte que le niveau d'interférences entre cellules voisines augmente (une communication dans une cellule peut gêner une communication dans la cellule voisine).

Un autre problème est qu'un tel déploiement réduit l'efficacité énergétique du réseau car certaines zones peuvent être suréquipées en petites cellules ce qui provoque une consommation inutile d'énergie, les petites cellules pouvant être actives inutilement.

On pourra se référer au document Y. Chen, S. Zhang, and S. Xu, "Characterizing Energy Efficiency and Deployment Efficiency Relations for Green Architecture Design," Proc. IEEE ICC '10, Cape Town, South Africa, May 2010 ou au brevet US2010/169498 (publié le 10 Juillet 2010) qui ont mis en évidence de tels problèmes.

Il existe par conséquent un besoin pour une activation intelligente et dynamique des petites cellules pour limiter le cout énergétique et en même temps garantir une qualité de service (en anglais « *Quality of Service »,* (QoS)) pour les utilisateurs.

### PRESENTATION DE L'INVENTION

L'invention répond à ce besoin en proposant, selon un premier aspect, un procédé de gestion d'un réseau d'une pluralité de stations de base de petites cellules, disposées dans une région d'une macro cellule dans laquelle se trouve au moins un terminal, chaque station de base de petite cellule étant adaptée pour couvrir une petite cellule, le procédé étant caractérisé en ce que :
- on détermine un ensemble A d'au moins une petite cellule, couvrant ledit au moins un terminal présent dans la région, la détermination dudit ensemble A consistant à localiser chaque petite cellule et chaque terminal pour obtenir toutes les connexions possibles entre un terminal et une petite cellule de la région;
- on sélectionne parmi ledit ensemble A, le plus petit sous-ensemble B d'au moins une petite cellule permettant de couvrir ledit au moins un terminal ;
- on active ladite au moins une petite cellule dudit sous-ensemble B sélectionné.

L'invention est avantageusement complétée par les caractéristiques suivantes, prises seules ou en quelconque de leur combinaison techniquement possible:
- on désactive, ladite au moins une petite cellule active n'appartenant pas audit sous-ensemble B sélectionné ;
- on détermine exhaustivement les sous-ensembles possibles d'au moins une petite cellule permettant de couvrir tous les terminaux présents dans la zone et en ce qu'on sélectionne le plus petit sous-ensemble de petite cellule ;
- pour sélectionner le sous-ensemble B, pour chaque terminal présent dans la région, on définit un degré d'appartenance comme étant le nombre de petite(s) cellule(s) couvrant ledit terminal, la sélection du plus petit sous-ensemble B étant effectuée successivement pour chaque terminal en fonction d'un degré d'appartenance croissant ;
- on met en oeuvre successivement les étapes suivantes pour sélectionner le sous-ensemble B :
   a) pour le terminal ayant le degré d'appartenance le plus faible, on sélectionne, parmi ladite au moins une petite cellule de l'ensemble A, une petite cellule, cette petite cellule constituant un élément du sous-ensemble B ;
   b) pour chaque terminal de degré d'appartenance croissant, supérieur au degré d'appartenance le plus faible, on sélectionne le sous-ensemble B à partir du sous-ensemble B obtenu pour le terminal de degré d'appartenance immédiatement inférieur en mettant en oeuvre les étapes suivantes :
      i) on vérifie d'abord si une petite cellule du sous-ensemble B permet de couvrir ledit terminal, et le cas échéant on sélectionne cette petite cellule ;
      ii) si plusieurs petites cellules du sous-ensemble B permettent de couvrir ledit terminal, on sélectionne une petite cellule qui satisfait le mieux le critère de sélection pour ledit terminal ;
      iii) si aucune petite cellule du sous-ensemble B ne permet de couvrir ledit terminal, on sélectionne dans ledit ensemble A une petite cellule n'appartenant pas au sous-ensemble B et qui satisfait le mieux le critère de sélection, cette petite cellule étant ajoutée au sous-ensemble B ; ledit sous-ensemble B étant alors utilisé pour le terminal de degré supérieur ;
- le critère de sélection est une puissance du signal reçu de la petite cellule par le terminal ;
- le critère de sélection est un critère de distance, la petite cellule sélectionnée étant la plus proche du terminal considéré.

L'invention propose également un réseau de télécommunication cellulaire comprenant au moins une station de base, chaque station de base étant connectée à une pluralité de petites cellules, ledit réseau comprenant des équipements adaptés pour mettre en oeuvre un procédé selon l'invention.

Les avantages de l'invention sont multiples.

L'invention permet d'adapter le réseau de petites cellules au nombre de terminaux présents dans la région qu'il couvre tout en limitant les interférences entre cellules adjacentes.

Une telle adaptation permet en outre de réduire la consommation énergétique du réseau : seules les petites cellules nécessaires sont actives.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un agencement entre une station de base et plusieurs petites cellules ;
- la figure 2 illustre une région de la figure 1 couverte par un réseau de petites cellules ;
- les figures 3a et 3b illustrent deux modes de réalisation d'une architecture d'une macro-cellule conforme à l'invention ;
- la figure 4 illustre des étapes d'un procédé selon un mode de réalisation de l'invention

Sur l'ensemble des figures, les éléments similaires portent des références numériques identiques.

### DESCRIPTION DETAILLEE DE L'INVENTION

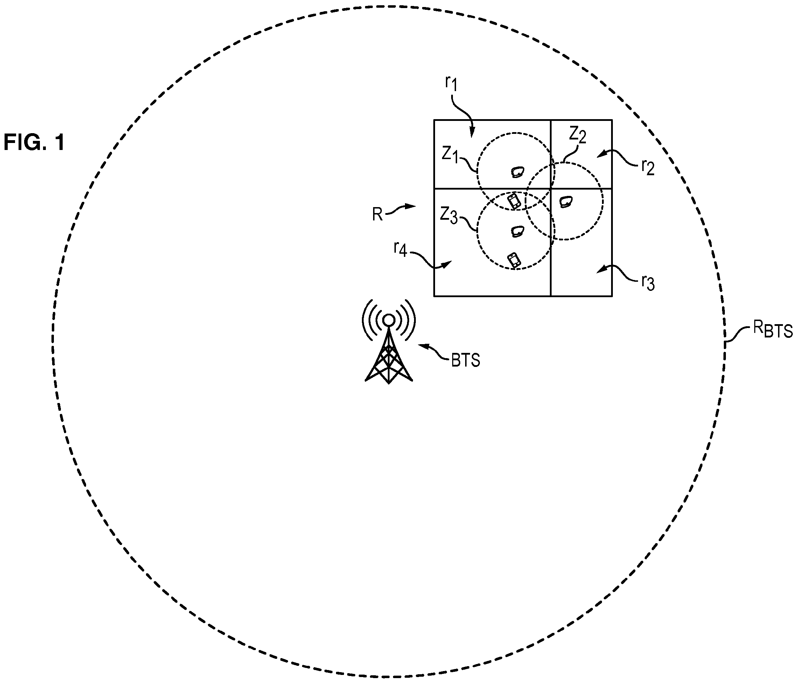

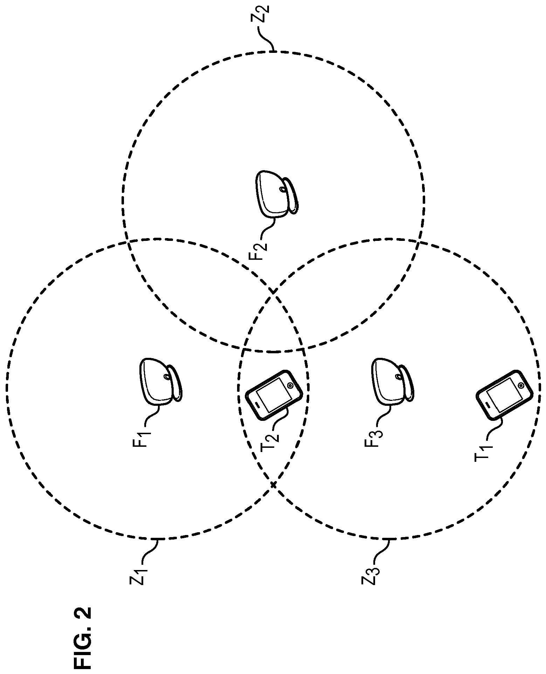

En relation avec les figures 1 et 2, une macro-cellule R-BTS est couverte par une station de base BTS (en anglais, « *Base Transceiver Station* », (BTS)).

Dans la macro-cellule R-BTS, trois petites cellules Z1, Z2, Z3 sont déployées dans une région R de la macro-cellule. Chaque petite cellule comprend une station de base F1, F2, F3 (voir la figure 2) qui contrôle les communications dans la petite cellule correspondante. Une petite cellule Zi (i=1, 2, 3) est la zone couverte par la station de base Fi de petite cellule.

Chaque station de base de petite cellule est adaptée pour être en liaison radio avec au moins un terminal mobile T1, T2 (tel qu'un smartphone) présent dans la petite cellule Zi.

On entend par liaison radio entre un terminal et une station de base de petite cellule, le fait que le terminal est connecté à la station de base de petite cellule de sorte que le terminal communique avec cette station de base de petite cellule.

On entend en outre par « couverture d'une zone » la zone radio définie par une petite cellule.

Plusieurs déploiements de petites cellules sont possibles. Le document 3GPP TSG-RAN4#51, Alcatel-Lucent, picoChip Designs, and Vodafone, "R4-092042, Simulation assumptions and parameters for FDD HENB RF requirements," mai 2009 décrit un exemple de déploiement selon une grille.

Sur la figure 1, trois petites cellules sont respectivement réparties selon une grille, chaque case r1, r2, r3 de la grille correspondant par exemple à un appartement ou un bureau d'une région R.

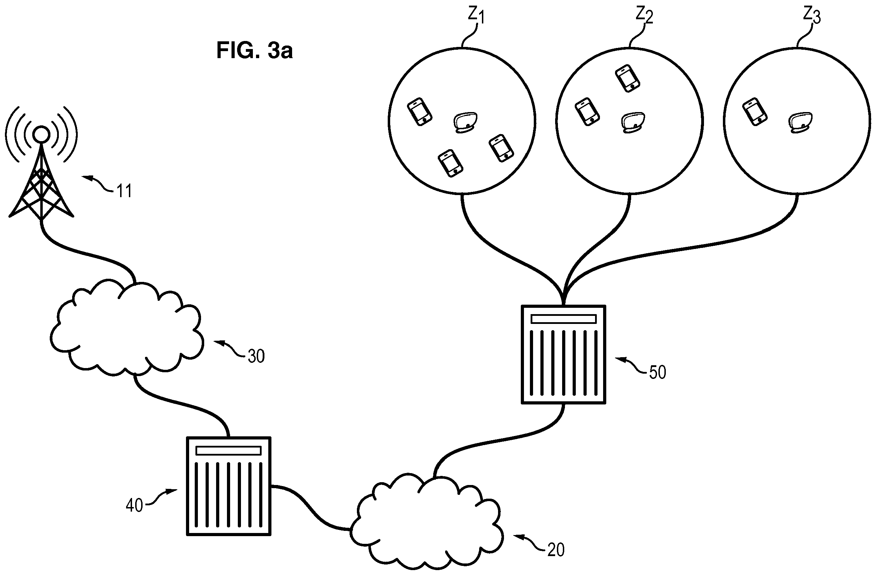

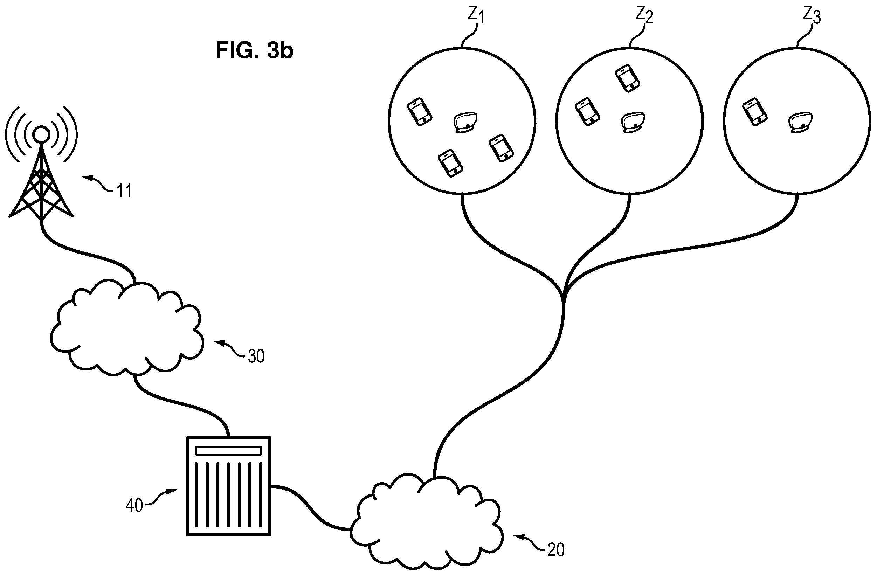

Les figures 3a et 3b illustrent l'architecture d'une macro-cellule R-BTS couverte par une station de base BTS.

Comme déjà mentionné, les petites cellules Z1, Z2, Z3 sont connectées au réseau d'un opérateur 30 via un réseau 20 Internet haut débit.

C'est la station de base BTS de la macro-cellule R-BTS qui permet de définir le réseau de l'opérateur dans cette dernière.

Les stations de base de petites cellules F1, F2, F3 permettent de supporter le trafic à destination de ou provenant d'un téléphone mobile Tj présent dans la région R.

Chaque station de base de petite cellule peut supporter de deux à huit terminaux simultanément et fonctionne dans la même bande de fréquences que la station de base BTS de la macro-cellule R-BTS.

L'interface entre le réseau Internet haut débit et le réseau de l'opérateur est effectuée au moyen d'une passerelle 40.

La passerelle 40 permet aux stations de base de petites cellules 110 de communiquer avec le réseau de l'opérateur 30 de manière transparente sans avoir à introduire des modifications aux standards de communications cellulaires.

De plus, la passerelle 40 évite qu'un nombre excessif de terminaux soient directement connectés au réseau de l'opérateur 30.

Ainsi, un terminal qui est en liaison radio avec une petite cellule communique avec le réseau de l'opérateur via cette dernière.

La liaison radio n'est possible qu'avec une petite cellule active c'est-à-dire que la station de base définissant la petite cellule est sous tension.

On précise que l'on considère que la petite cellule peut être active c'est-à-dire que la station de base de petite cellule est sous tension ou bien que la petite cellule peut être inactive c'est-à-dire que la station de base de petite cellule n'est pas sous tension.

La gestion du trafic dans une macro-cellule comprenant un réseau de stations de base de petites cellules peut être mise en oeuvre de plusieurs manières.

Selon un mode de réalisation, la gestion du trafic vers les petites cellules est gérée de manière centralisée. La figure 3a illustre un tel mode de réalisation. Selon ce mode de réalisation, les stations de base de petites cellules sont gérées par un module de gestion 50 disposé entre le réseau Internet 20 et la passerelle 40. Le module de gestion 50 a pour fonction de gérer plusieurs petites cellules (trois sur la figure 3a). Ainsi, le module de gestion 50 est connecté d'un part aux stations de base de petites cellules du réseau de stations de base de petites cellules qu'il doit gérer et d'autre part au réseau Internet 20. Un tel module de gestion 50 permet de gérer le trafic à destination des petites cellules, d'activer/désactiver les petites cellules en fonction du trafic (voir ci-après). Ainsi, le module de gestion comprend une mémoire pour stocker le trafic (c'est-à-dire un ou plusieurs paquet(s) de données à destination d'au moins un terminal).

Selon un autre mode de réalisation, la gestion du trafic vers les petites cellules est gérée de manière distribuée. La figure 3b illustre un tel mode de réalisation. Selon ce mode de réalisation, les petites cellules elles-mêmes peuvent s'activer ou se désactiver de manière autonome en fonction du trafic

Selon ce mode de gestion, l'ensemble des paquets de données qui est destiné aux terminaux qui se trouvent dans le réseau de petites cellules est directement accessibles par les stations de base de petites cellules.

Il y a deux possibilités d'implémentation de ce mode de gestion :
1) Toutes les stations de base de petites cellules reçoivent les paquets de données par l'intermédiaire du réseau cellulaire et ensuite elles stockent ces paquets de donnés dans une mémoire incluse dans chaque station de base de petite cellule ;
2) Les paquets de données à destination des terminaux présents dans le réseau de petites cellules sont stockés dans une mémoire de la passerelle ; les stations de base de petites cellules peuvent alors demander explicitement à la passerelle l'envoi des paquets de données qu'elles doivent transmettre.

Selon un autre mode de réalisation, la passerelle 40 peut avoir la fonction logique de contrôle du réseau de petites cellules, dans ce cas la passerelle 40 est elle-même le module de gestion.

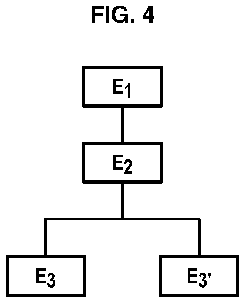

On décrit maintenant un procédé de gestion de plusieurs petites cellules en relation avec les figures 2 et 4.

On considère deux terminaux T1, T2 dans la région R dans laquelle trois petites cellules F1, F2, F3 sont déployées.

L'objectif étant que pour une région R donnée, le nombre de petites cellules actives soit minimum tout en permettant à tous les terminaux T1, T2 présents dans la région R d'être connectés à une petite cellule, les petites cellules inutiles étant alors désactivées.

Dans une étape on détermine E1 un ensemble A d'au moins une petite cellule permettant de couvrir chaque terminal présent dans la région R.

Dans cette étape il s'agit de déterminer dans quelle(s) petite(s) cellule(s) chaque terminal du réseau de petites cellules se trouve. De cette façon il est possible de déterminer les connexions possibles entre un terminal et une station de base de petite cellule.

En outre, chaque connexion possible entre un terminal et une station de base de petite cellule peut être définie par diverses métriques, métriques qui peuvent être utilisées au cours d'une étape de sélection (voir ci-après).

Pour chaque terminal, dans la zone de couverture d'une station de base de petite cellule, une métrique peut être la distance entre le terminal et la station de base de petite cellule. Une autre métrique peut être une évaluation du lien radio (niveau de puissance du signal reçu par le terminal de la station de base de petite cellule). Ces métriques sont utilisées par la suite comme critère de sélection.

Cette étape E1 est de préférence mise en oeuvre périodiquement afin de gérer les déplacements éventuels des terminaux dans le réseau de petites cellules et peut être mise en oeuvre de plusieurs manières :
- chaque station de base de petite cellule peut se réveiller périodiquement, pendant une certaine durée, pour détecter la présence éventuelle d'un terminal dans sa zone de couverture ;
- un terminal peut activer à distance une petite cellule par l'envoi d'un message de réveil auquel la station de base de petite cellule est sensible ;
- le module de gestion peut avoir une connaissance de la position des terminaux par rapport à une station de base de petites cellules via une information de localisation que le terminal peut transmettre au module de gestion.

Comme on l'aura compris au cours de l'étape de détermination E1 de l'ensemble A, les petites cellules sont actives pendant la durée nécessaire à la localisation d'au moins un terminal dans leur zone de couverture.

Bien entendu, une fois l'étape de détermination E1 terminée, les petites cellules redeviennent inactives.

Dans l'exemple de la figure 2, le terminal T1 se trouve dans la zone couverte par la petite cellule F3 tandis que le terminal T2 se trouve dans la zone couverte par la petite cellule F1 et dans la zone couverte par la petite cellule F3.

Cette étape de détermination E1 permet ainsi d'avoir parmi les petites cellules déployées dans la région R un ensemble A de petites cellules pour couvrir la région R (en fonction bien entendu des terminaux présents dans la région) tout en assurant une qualité de service optimale.

Suite à l'obtention de l'ensemble A de petite(s) cellule(s) on sélectionne E2 dans l'ensemble A, le plus petit sous-ensemble B de petite(s) cellule(s) pour assurer la couverture de tous les terminaux présents dans la région R ; seules lesdites petites cellules du sous-ensemble B devront ensuite être actives.

Dans le cas d'une gestion centralisée, à l'issue de l'étape de sélection E2, on active E3 la ou les petite(s) cellule(s) du sous-ensemble B. C'est le module de gestion qui va mettre en oeuvre la sélection E2 puis l'activation E3 de la ou les petite(s) cellule(s) du sous-ensemble B.

Dans le cas d'une gestion distribuée, on désactive E3' la ou les petite(s) cellule(s) n'appartenant pas au sous-ensemble B..

Dans l'exemple de la figure 2 seule la petite cellule F3 est donc, à l'issu du procédé, activée puisqu'elle couvre à la fois le terminal T1 et le terminal T2, les petites cellules F1 et F2 étant quant à elles inactives.

De cette façon, la couverture de la région R est optimisée en termes de consommation d'énergie tout en offrant les ressources nécessaires à la gestion du trafic relatif aux terminaux présents dans la région R.

La sélection du sous ensemble B peut se faire de manière exhaustive en testant un par un tous les sous-ensembles possibles.

Alternativement et de manière préférée, la sélection du sous-ensemble peut se faire de manière empirique en considérant chaque terminal un à un.

On détaille ci-dessous la sélection du plus petit sous-ensemble B de petites cellules selon une manière empirique.

Dans une première sous-étape on définit un degré d'appartenance Dj correspondant à un terminal Tj. Ce degré d'appartenance est le nombre de petite(s) cellule(s) possible(s) pour un terminal donné c'est-à-dire le nombre de petite cellule couvrant un terminal.

Dans l'exemple de la figure 2, pour le terminal T1 le degré d'appartenance D1 est égal à 1 (le terminal T1 est dans la zone couverte par la petite cellule F3) tandis que pour le terminal T2 le degré d'appartenance D2 est égal à 2 (le terminal T2 est dans la zone couverte par la petite cellule F1 et dans la zone couverte par la petite cellule F3).

Ce degré d'appartenance permet de hiérarchiser la sélection parmi les petites cellules possibles.

Pour le terminal ayant le degré d'appartenance le plus faible on sélectionne parmi la ou les petite(s) cellule(s) une petite cellule capable de couvrir ledit terminal qui satisfait le mieux un critère de sélection, cette petite cellule constituant un élément de sous-ensemble B.

Ensuite, pour chaque terminal de degré d'appartenance croissant, supérieur au degré d'appartenance le plus faible, on sélectionne le sous-ensemble B à partir du sous-ensemble B obtenu pour le terminal de degré d'appartenance immédiatement inférieur en mettant en oeuvre les étapes suivantes :
i) on vérifie d'abord si une petite cellule du sous-ensemble B permet de couvrir ledit terminal, et le cas échéant on sélectionne cette petite cellule ;
ii) si plusieurs petites cellules du sous-ensemble B permettent de couvrir ledit terminal, on sélectionne une petite cellule qui satisfait le mieux le critère de sélection pour ledit terminal ;
iii) si aucune petite cellule du sous-ensemble B ne permet de couvrir ledit terminal, on sélectionne dans ledit ensemble A une petite cellule n'appartenant pas au sous-ensemble B et qui satisfait le mieux le critère de sélection, cette petite cellule étant ajoutée au sous-ensemble B ; ledit sous-ensemble B étant alors utilisé pour le terminal de degré.

Le critère de sélection peut être un critère de distance : la petite cellule la plus proche parmi les petites cellules de la région R est sélectionnée.

Alternativement, le critère de sélection peut être un critère de niveau de puissance : la petite cellule fournissant le niveau de puissance le plus fort.

Il s'agit des métriques précédemment obtenues au cours de l'étape de détermination E1.

Dans l'exemple de la figure 2, on considère d'abord le terminal T1 puisque le degré d'appartenance D1 est le plus faible.

Pour ce terminal T1 comme on l'a déjà mentionné, seule la petite cellule F3 est possible. Par conséquent, cette petite cellule F3 est sélectionnée.

On note que dans le cas ou plusieurs petites cellules sont possibles pour le terminal T1 on choisit celle qui satisfait le mieux le critère de sélection. Cela peut être par exemple un pourcentage du critère de sélection.

Ensuite, pour le terminal T2 on teste d'abord la petite cellule F3 puisqu'elle a déjà été sélectionnée et qu'elle est une petite cellule qui peut convenir au terminal T1.

La petite cellule F3 est par conséquent sélectionnée et la petite cellule F1 n'est pas sélectionnée.

## Revendications

1. Procédé de gestion d'un réseau d'une pluralité de stations de base de petites cellules (F1, F2, F3), disposées dans une région (R) d'une macro cellule (R-BTS) dans laquelle se trouve au moins un terminal (T1, T2, T3), chaque station de base de petite cellule (F1, F2, F3) étant adaptée pour couvrir une petite cellule (Z1, Z2, Z3), le procédé étant **caractérisé en ce que** :
- on détermine (E1) un ensemble A d'au moins une petite cellule (Z1, Z3), couvrant ledit au moins un terminal (T1, T2) présent dans la région (R), la détermination dudit ensemble A consistant à localiser chaque petite cellule et chaque terminal pour obtenir toutes les connexions possibles entre un terminal et une petite cellule de la région (R).;
- on sélectionne (E2) parmi ledit ensemble A, le plus petit sous-ensemble B d'au moins une petite cellule (Z3) permettant de couvrir ledit au moins un terminal (T1, T2) ;
- on active (E3) ladite au moins une petite cellule (Z3) dudit sous-ensemble B sélectionné.

2. Procédé selon la revendication 1, dans lequel on désactive (E3'), ladite au moins une petite cellule active (Z1, Z2) n'appartenant pas audit sous-ensemble B sélectionné.

3. Procédé de gestion selon l'une des revendications précédentes, dans lequel on détermine exhaustivement les sous-ensembles possibles d'au moins une petite cellule permettant de couvrir tous les terminaux présents dans la zone et en ce qu'on sélectionne le plus petit sous-ensemble de petite cellule.

4. Procédé de gestion selon l'une des revendications 1 à 2, dans lequel pour sélectionner le sous-ensemble B, pour chaque terminal présent dans la région (R), on définit un degré d'appartenance comme étant le nombre de petite(s) cellule(s) couvrant ledit terminal, la sélection du plus petit sous-ensemble B étant effectuée successivement pour chaque terminal en fonction d'un degré d'appartenance croissant.

5. Procédé de gestion selon la revendication 4, dans lequel on met en oeuvre successivement les étapes suivantes pour sélectionner le sous-ensemble B :
a) pour le terminal ayant le degré d'appartenance le plus faible, on sélectionne, parmi ladite au moins une petite cellule de l'ensemble A, une petite cellule, cette petite cellule constituant un élément du sous-ensemble B;
b) pour chaque terminal de degré d'appartenance croissant, supérieur au degré d'appartenance le plus faible, on sélectionne le sous-ensemble B à partir du sous-ensemble B obtenu pour le terminal de degré d'appartenance immédiatement inférieur en mettant en oeuvre les étapes suivantes :
i) on vérifie d'abord si une petite cellule du sous-ensemble B permet de couvrir ledit terminal, et le cas échéant on sélectionne cette petite cellule ;
ii) si plusieurs petites cellules du sous-ensemble B permettent de couvrir ledit terminal, on sélectionne une petite cellule qui satisfait le mieux un critère de sélection pour ledit terminal ;
iii) si aucune petite cellule du sous-ensemble B ne permet de couvrir ledit terminal, on sélectionne dans ledit ensemble A une petite cellule n'appartenant pas au sous-ensemble B et qui satisfait le mieux le critère de sélection, cette petite cellule étant ajoutée au sous-ensemble B ; ledit sous-ensemble B étant alors utilisé pour le terminal de degré supérieur.

6. Procédé de gestion selon la revendication précédente, dans lequel le critère de sélection est une puissance du signal reçu de la petite cellule par le terminal.

7. Procédé de gestion selon la revendication 5, dans lequel le critère de sélection est un critère de distance, la petite cellule sélectionnée étant la plus proche du terminal considéré.

8. Réseau de télécommunication cellulaire comprenant au moins une station de base, chaque station de base étant connectée à une pluralité de petites cellules, ledit réseau comprenant des équipements adaptés pour mettre en oeuvre un procédé selon l'une des revendications précédentes.

## Patentansprüche

1. Verwaltungsverfahren eines Netzes aus einer Vielzahl von Basisstationen kleiner Zellen (F1, F2, F3), die in einem Bereich (R) einer Makrozelle (R-BTS) angeordnet sind, in der sich wenigstens ein Terminal (T1, T2, T3) befindet, wobei jede Basisstation kleiner Zellen (F1, F2, F) geeignet ist, um eine kleine Zelle (Z1, Z2, Z3) abzudecken, wobei das Verfahren **dadurch gekennzeichnet, ist, dass**:
- eine Struktur A wenigstens einer kleinen Zelle (Z1, Z3) bestimmt wird (E1), die das genannte wenigstens eine Terminal (T1, T2) abdeckt, das in dem Bereich (R) vorhanden ist, wobei die Bestimmung der genannten Struktur A in der Lokalisierung jeder kleinen Zelle und jedes Terminals besteht, um alle möglichen Anschlüsse zwischen einem Terminal und einer kleinen Zelle des Bereichs (R) zu erhalten,
- aus der genannten Struktur A die kleinste Teilstruktur B wenigstens einer kleinen Zelle (Z3) ausgewählt (E2) wird, die die Abdeckung wenigstens eines Terminals (T1, T2) zulässt;
- die genannte wenigstens eine kleine Zelle (Z3) der genannten ausgewählten Teilstruktur B aktiviert wird (E3).

2. Verfahren gemäß Anspruch 1, bei dem die genannte wenigstens eine aktive kleine Zelle (Z1, Z2) deaktiviert wird (E3'), die nicht zu der ausgewählten Teilstruktur B gehört.

3. Verwaltungsverfahren gemäß einem der voranstehenden Ansprüche, bei dem die möglichen Teilstrukturen wenigstens einer kleinen Zelle umfassend bestimmt werden, die die Abdeckung aller in dem Bereich vorhandenen Terminals zulässt und dass die kleinste Teilstruktur kleiner Zellen ausgewählt wird.

4. Verwaltungsverfahren gemäß irgendeinem der Ansprüche 1 bi 2, bei dem zur Auswahl der Teilstruktur B für jedes in dem Bereich (R) vorhandene Terminal ein Zugehörigkeitsgrad als die Anzahl von kleinen Zellen definiert ist, die das genannte Terminal abdecken, wobei die Auswahl der kleinsten Teilstruktur B sukzessive für jedes Terminal in Abhängigkeit eines ansteigenden Zugehörigkeitsgrades durchgeführt wird.

5. Verwaltungsverfahren gemäß Anspruch 4, bei dem sukzessive die folgenden Schritte zur Auswahl der Teilstruktur B umgesetzt werden:
a) Für das Terminal mit dem geringsten Zugehörigkeitsgrad wird aus der genannten wenigstens einen kleinen Zelle der Struktur A eine kleine Zelle ausgewählt, wobei diese kleine Zelle ein Element der Teilstruktur B bildet;
b) Für jedes Terminal mit einem ansteigenden Zugehörigkeitsgrad, der höher ist als der geringste Zugehörigkeitsgrad wird die Teilstruktur B aus der Teilstruktur B ausgewählt, die für das Terminal mit dem unmittelbar niedrigeren Zugehörigkeitsgrad erhalten wird, in dem die folgenden Schritte umgesetzt werden:
i) Es wird zunächst überprüft, ob eine kleine Zelle der Teilstruktur B die Abdeckung des genannten Terminals zulässt, und ggf. wird diese kleine Zelle ausgewählt;
ii) Wenn mehrere kleine Zellen der Teilstruktur B die Abdeckung des genannten Terminals zulassen, wird eine kleine Zelle ausgewählt, die einem Auswahlkriterium für das genannte Terminal am besten gerecht wird;
iii) Wenn keine kleine Zelle der Teilstruktur B die Abdeckung des genannten Terminals zulässt, wird in der genannten Teilstruktur A eine kleine Zelle ausgewählt, die nicht zu der Teilstruktur B gehört und die dem Auswahlkriterium am besten gerecht wird, wobei diese kleine Zelle zu der Teilstruktur B hinzugefügt wird; wobei die genannte Teilstruktur B dann für das Terminal höheren Grades verwendet wird.

6. Verwaltungsverfahren gemäß dem voranstehenden Anspruch, bei dem das Auswahlkriterium eine Stärke des Signals ist, das von der kleinen Zelle durch das Terminal empfangen wird.

7. Verwaltungsverfahren gemäß Anspruch 5, bei dem das Auswahlkriterium ein Entfernungskriterium ist, wobei die ausgewählte kleine Zelle die nächste des betrachteten Terminals ist.

8. Zelltelekommunikationsnetz, umfassend wenigstens eine Basisstation, wobei jede Basisstation an eine Vielzahl von kleinen Zellen angeschlossen ist, wobei das genannte Netz Ausrüstungen umfasst, die geeignet sind, um ein Verfahren gemäß irgendeinem der voranstehenden Ansprüche umzusetzen.

## Claims

1. A method for managing a network of a plurality of small cell base stations (F1, F2, F3), disposed in a region (R) of a macro cell (R-BTS) in which at least one terminal (T1, T2, T3) is, each small cell base station (F1, F2, F3) being adapted to cover a small cell (Z1, Z2, Z3), the method being **characterised by**:
- determining (E1) a set A of at least one small cell (Z1, Z2, Z3), covering said at least one terminal (T1, T2) present in the region (R), determining said set A consisting in locating each small cell and each terminal to obtain all the possible connections between a terminal and a small cell of the region (R);
- selecting (E2) from said set A, the smallest subset B of at least one small cell (Z3) for covering said at least one terminal (T1, T2);
- activating (E3) said at least one small cell (Z3) of said selected subset B.

2. The method according to claim 1, wherein said at least one active cell (Z1, Z2) which does not belong to said selected subset B is deactivated (E3').

3. The managing method according to one of the previous claims, wherein the possible subsets of at least one small cell for covering all the terminals present in the area are exhaustively determined and the smallest subset of small cell is selected.

4. The managing method according to one of claims 1 to 2, wherein in order to select the subset B, for each terminal present in the region (R), a membership degree is defined as the number of small cell(s) covering said terminal, selecting the smallest subset B being successively performed for each terminal as a function of an increasing membership degree.

5. The managing method according to claim 4, wherein the following steps are successively implemented in order to select the subset B:
a) for the terminal having the lowest membership degree, selecting a small cell from said at least one small cell of the set A, this small cell constituting an element of the subset B;
b) for each terminal having an increasing membership degree, greater than the lowest membership degree, selecting subset B from the subset B obtained for the terminal having the immediately lower membership degree by implementing the following steps:
i) checking first if a small cell of the subset B enables said terminal to be covered, and if applicable selecting this small cell;
ii) if several small cells of the subset B enable said terminal to be covered, selecting a small cell which best meets a selection criterion for said terminal;
iii) if no small cell of the subset B enables said terminal to be covered, selecting from said set A a small cell which does not belong to the subset B and which best meets the selection criterion, this small cell being added to the subset B; said subset B being then used for the higher degree terminal.

6. The managing method according to the previous claim, wherein the selection criterion is a power of the signal received from the small cell by the terminal.

7. The managing method according to claim 5, wherein the selection criterion is a distance criterion, the selected small cell being the nearest to the considered terminal.

8. A cellular telecommunication network comprising at least one base station, each base station being connected to a plurality of small cells, said network comprising adapted equipment to implement a method according to one of the previous claims.
